**Europäisches Patentamt**

**European Patent Office**

**Office européen des brevets**

(19)

(11) Veröffentlichungsnummer: **0 223 996**
**B1**

(12) **EUROPÄISCHE PATENTSCHRIFT**

(45) Veröffentlichungstag der Patentschrift:
**11.10.89**

(51) Int. Cl.⁴: **B60D 1/00**

(21) Anmeldenummer: **86114087.9**

(22) Anmeldetag: **10.10.86**

(54) Anhängevorrichtung für Fahrzeuge.

(30) Priorität: **23.11.85 DE 3541520**
**04.06.86 DE 3618809**

(43) Veröffentlichungstag der Anmeldung:
**03.06.87 Patentblatt 87/23**

(45) Bekanntmachung des Hinweises auf die Patenterteilung:
**11.10.89 Patentblatt 89/41**

(84) Benannte Vertragsstaaten:
**AT BE CH DE FR GB IT LI NL SE**

(56) Entgegenhaltungen:
**EP-A- 0 160 934**
**EP-A- 0 169 263**
**DE-A- 3 004 285**
**DE-A- 3 317 453**
**US-A- 3 043 411**
**US-A- 3 088 768**
**US-A- 4 201 400**

(73) Patentinhaber: **Dickmann, Thomas, Dr.-Ing.,**
**Erich-Heckel-Strasse 63, D-7500 Karlsruhe 41(DE)**

(72) Erfinder: **Dickmann, Thomas, Dr.-Ing.,**
**Erich-Heckel-Strasse 63, D-7500 Karlsruhe 41(DE)**

(74) Vertreter: **Trappenberg, Hans, Postfach 1909,**
**D-7500 Karlsruhe 1(DE)**

ACTORUM AG

**Beschreibung**

Die Erfindung betrifft eine Anhängevorrichtung für Fahrzeuge, insbesondere für Kraftfahrzeuge, gebildet aus einer am Fahrzeug angebrachten Halterung, in der eine Kugelstange lösbar zu befestigen ist, wobei die Halterung eine den Kugelstangenschaft aufnehmende Hülse ist, die vorderseitig Anschlagflächen für seitlich vom Schaft abstehende Bolzen und rückseitig eine Verspannrampe für eine endständig am Kugelstangenschaft vorgesehene Verspannfläche sowie eine Auflauframpe für die Auflauffläche eines am Kugelstangenschaft verschiebbar geführten Schiebers aufweist.

Eine derartige Vorrichtung ist bekannt aus der DE-A 16 55 012. Nachteilig wird bei dieser Konstruktion empfunden, daß zum Einführen des Schiebers und damit zum Sichern der Kugelstange in der Hülse eine manuelle Tätigkeit notwendig ist beziehungsweise daß beim Unterlassen dieser Verriegelung oder beim nur teilweise Einführen des Schiebers die Betriebssicherheit der Konstruktion nicht gewährleistet ist. Auch eine Weiterbildung dieser bekannten Vorrichtung nach der DE-A 30 04 285 ist mit diesem Nachteil behaftet. Dem will eine weiter bekannte Konstruktion nach der DE-A 33 27 051 begegnen, die das Einschieben des Schiebers, also des Sicherungsmittels, über Federkraft vorschlägt. Zum Spannen der diese Kraft bewirkenden Feder ist an einem, mit der Feder verbundenen Stellring ein Handhebel vorgesehen, der zum Lösen der Kugelstange aus der Hülse betätigt werden muß und hierbei die Feder in den Spannzustand bringt. Beim Einführen allerdings, wenn also die Feder den Schieber in die Sicherungsstellung verschieben soll, verdreht sich auch wiederum der Stellring und damit der Handhebel, wobei es, durch hindernde Gegenstände beispielsweise, durchaus dazu kommen kann, daß der Stellring mit dem Handhebel in der Verdrehbewegung behindert wird und damit auch wiederum der Schieber nicht in seine sichernde Endstellung gelangt.

Eine Verbesserung dieser letztgenannten Konstruktion beabsichtigt die europäische Patentanmeldung EP-A 0 169 263. Hier wirkt nicht mehr wie bei der Konstruktion nach der oben angeführten DE-A 33 27 051 eine Feder über einen Stellring und eine in ihm angebrachte Kulisse auf den Schieber, sondern die Federkraft wird dazu ausgenutzt, eine Exzenterwelle beziehungsweise einen Exzenter zu verdrehen, der nun seinerseits den Schieber in seine Endlage führt. Diese Gesamtkonstruktion läßt es zu, daß der Handhebel zum Spannen der Feder verhältnismäßig klein gehalten und außerdem auch noch kippbar angeordnet werden kann, so daß das Verdrehen der Exzenterwelle beziehungsweise das Einschieben des Schiebers praktisch nicht mehr behindert wird.

Bei diesen Weiterbildungen der Erfindung nach der DE-A 16 55 012 ist festzustellen, daß zumindest ein Teil der auf die Kugelstange einwirkenden Betriebskräfte, insbesondere der in Längsrichtung wirkenden Zug- und Druckkräfte, von dem Schieber aufgenommen werden müssen. Wenn hierdurch auch nicht unmittelbar die Betriebssicherheit eines solchen Systems beeinflußt wird, so wäre es doch angebracht, wenn keine Kräfte vom Schieber aufzunehmen wären und er nur der Sicherung der alle diese Betriebskräfte aufnehmenden und an die Hülse beziehungsweise das Fahrzeug weiterleitenden Kugelstange dienen würde.

Die eingangs angeführte Vorrichtung nach der DE-A 16 55 012 ist zwar, wird der Schieber korrekt in seine sichernde Lage gebracht, betriebssicher, jedoch nicht klapperfrei. Die Kugelstange kann bei dieser Vorrichtung innerhalb ihrer Hülse im Spiel zwischen der Ausnehmung im Kugelstangenschaft und dem Riegel in der Hülse hin- und hergeschoben werden, so daß sich jeweils beim Wechsel der Belastung ein Schlag auf die Hülse und damit auf das Fahrzeug ergibt. Abgesehen von den dynamischen Beanspruchungen auf diese Teile wird die dabei entstehende Geräuschentwicklung auch als äußerst störend empfunden.

Bei all den beschriebenen Konstruktionen wird der Kugelstangenschaft durch den außen anliegenden Schieber in seine verriegelte Stellung geführt. Die Höhe der Gesamtkonstruktion ist damit festgelegt durch die Höhe des Kugelstangenschaftes zuzüglich derjenigen der Schiebers. Gerade aber in dieser Richtung ist der Aufnahmeraum für eine derartige abnehmbare Kugelstange mit Halterung am Fahrzeug sehr klein, so daß des öfteren Schwierigkeiten beim Unterbringen der Vorrichtung am Fahrzeug auftreten. Ein Ziel der Erfindung muß es daher sein, die Höhe der Konstruktion gegenüber diesen bekannten Vorrichtungen zu verringern.

Aufgabe der Erindung ist es mithin, eine Konstruktion anzugeben, bei der beim Einführen des Kugelstangenschaftes in die Hülse automatisch der Sicherungsvorgang durch Verschieben des Schiebers in seine Endstellung vorgenommen wird, ohne daß hierzu weitere Manipulationen notwendig sind und ohne daß zu befürchten ist, daß dieser Sicherungsvorgang durch irgendwelche in den Bewegsvorgang des Schiebers eingreifende Hindernisse, insbesondere nicht durch Verschmutzung und Korrosion, beeinträchtigt wird. Hierbei soll der Schieber frei von in Längsrichtung des Schaftes wirkenden Betriebskräften sein, also ausschließlich der Kugelstange in der Hülse dienen. Eine weitere Aufgabe ergibt sich dadurch, daß die Konstruktion über ihre gesamte Lebensdauer klapperfrei sein und auch insbesondere in vertikaler Richtung geringe Abmessungen aufweisen soll.

Diese Aufgabe wird nach der Erfindung dadurch gelöst, daß der Schieber - vorzugsweise zentrisch - im Kugelstangenschaft gelagert, mit der am Schieberkopf vorgesehenen Auflauffläche am Ende des Kugelstangenschaftes an dessen Unterseite frei aus dem Kugelstangenschaft austritt und durch eine ihn in Richtung auf das Schaftende drückende Federkraft belastet und in der Endstellung verriegelbar ist, daß die Auflauframpe für die Auflauffläche des Schiebers ein in der Hülse angeordneter Auflaufbock ist, daß die Verspannfläche des Kugelstangenschaftes entweder die rückseitige oder die vorderseitige, jeweils nach innen geneigte Fläche eines quer in die Hülse eingefügten Riegels ist und daß die Anschlagflächen für den die vom Schaft abstehenden Bolzen entweder die Stirnkanten der Hülsen oder von der Hülse hervorstehende Haken sind.

Nicht mehr also wie bei den bisherigen Konstruktionen wird der Schieber außen am Kugelstangenschaft angeordnet, sondern, zusammen mit seiner ihn belastenden Feder, in einer längsverlaufenden Bohrung im Kugelstangenschaft, womit er nicht nur zuverlässig gegen das Eindringen von Schmutz wie auch gegen Korrosionserscheinungen geschützt ist, sondern sich auch die Einbauhöhe der Konstruktion um die Schieberhöhe verringert. Die Bedienung des Schiebers erfolgt über einen, einen Durchbruch im Kugelstangenschaft durchgreifenden Schieberhebel, wobei dieser Durchbruch mit an sich bekannten Mitteln sehr einfach und sicher gegen das Eindringen von Schmutz und Wasser etc. geschützt werden kann. Gleichzeitig sind bei dieser Konstruktion die zu bewegenden Elemente auf ein Minimum eingeengt und damit selbstverständlich auch die zu erwartenden Reibungswiderstände beim Einfügen der Kugelstange in ihre Hülse beziehungsweise beim Herausnehmen dieser Kugelstange. Dadurch aber ist es wiederum möglich, die Bedienungsglieder verhältismäßig klein zu halten, da nur geringe Kräfte zum Bedienen zu überwinden sind, so daß diese Glieder so ausgeführt werden können, daß sie keinesfalls die Funktionen der Konstruktion beeinträchtigen können. Weiter kann festgestellt werden, daß dieser so angeordnete Schieber tatsächlich nur den korrekten Sitz der Kugelstange in der Hülse sichert und keine in Längsrichtung des Schaftes wirkende Betriebskräfte aufzunehmen hat sowie auch, daß durch die besondere Art der Einspannung des Kugelstangenschaftes in der Hülse stets Klapperfreiheit der Vorrichtung gewährleistet ist.

Tatsächlich hat sich bei der praktischen Erprobung dieser abnehmbaren Kugelstange mit Halterung gezeigt, daß diese Vorrichtung

1. ohne irgendwelche zusätzlichen Manipulationen, lediglich durch das Einschieben der abnehmbaren Kugelstange in ihre Hülse, klapperfrei und sicher in dieser Hülse gehalten wird,
2. daß diese sichere Verriegelung in der Hülse auch selbst bei Wegfall von Sicherungselementen beibehalten wird,
3. daß diese einwandfreie Funktion auch nicht durch Verschmutzung oder Flugrost etc. beeinträchtigt wird und
4. daß sie ihrer geringen Höhe wegen leicht einbaubar ist.

Das Verspannen des Kugelstangenschaftes in der Hülse kann nach der Erfindung auf zweierlei Art und Weise herbeigeführt werden:

1. Durch Zugverspannung zwischen den an der Vorderseite der Hülse anschlagenden Bolzen und der durch den zwischen Kugelstangenschaft und Auflaufbock eingefügten Schieber an die Rückseite des Riegels angepreßten Verspannfläche, oder
2. durch Druckverspannung zwischen den in den von der Hülse hervorstehenden Haken gefangenen Bolzen und der wiederum durch den zwischen den Kugelstangenschaft und den Auflaufbock eingeschobenen Schieber auf die Vorderseite dieses Riegels aufgepreßten Verspannfläche.

Beide Male wird der Kugelstangenschaft in der Hülse so verspannt, daß er nicht nur sicher in ihr verankert und trotzdem leicht lösbar ist, sondern daß sich auch eine stets klapperfreie Verbindung zwischen diesen beiden Bauteilen ergibt.

Um auch bei Bruch der den Schieber belastenden Feder wie auch bei Versagen der den Schieber verriegelnden Sicherungsmittel das Auswandern des Schiebers aus der zwischen Kugelstangenschaft und Auflauframpe beziehungsweise Auflaufbock zwischengefügten Stellung zu verhindern, wird nach der Erfindung weiterhin vorgeschlagen, daß sowohl das Endteil der rampenförmigen Auflauffläche des Schieberkopfes wie auch eine entsprechende endständige Rastfläche der Auflauframpe entgegen der Rampensteigung geneigt sind, wobei die Neigung dieser Teile zwischen -030° und +010°, vorzugsweise bei 000° zu einer durch die Achse der Kugelstange gelegten Ebene liegen soll.

Die praktische Erprobung der Vorrichtung hat gezeigt, daß tatsächlich dann, wenn das abgeflachte beziehungsweise abgeschrägte Endteil des Schiebers auf die entsprechend gestaltete Rastfläche des Auflaufbocks zu liegen kommt, die Auswärtsbewegung des Schiebers auch bei sehr starker Rütteleinwirkung gestoppt wird. Dies ist darauf zurückzuführen, daß der Schieber keinerlei Belastungen in seiner Achsrichtung durch die eigentlichen Kuppelorgane ausgesetzt ist und, ist er von der Auflauframpe bis zu der Rastfläche vorgerutscht, ein Bewegungsimpuls, der ihn weiter aus dieser Stellung treiben würde, nicht mehr besteht. Ist eine zur Steigung der Auflauframpe negative Abschrägung vorgesehen, so tritt ab dieser Stellung sogar eine Verriegelung auf, die exemplarisch das Weiterwandern des Schiebers verhindert und beim Herausnehmen der Kugelstange aus der Hülse erst durch entsprechende Mittel beziehungsweise Kräft überwunden werden muß.

Eine weitere Möglichkeit zur Sicherung des Schiebers besteht noch darin, daß die Neigung der Auflauframpe und diejenige der Auflauffläche des Schiebers im Bereich der Selbsthemmung liegen. Dadurch wird nicht nur eine Sicherung des Schiebers bewirkt, sondern es kann die auf den Schieber einwirkende Federkraft sehr gering gehalten werden, wodurch sich auch die Handhabung der Vorrichtung sehr erleichtert. Um ein zu starkes Verkeilen des Schiebers, was unter Umständen dazu führen könnte, das das Lösen des Schiebers aus seiner Arbeitsstellung erschwert wird, zu vermeiden, wird bei dieser Sicherungsmöglichkeit vorgeschlagen, daß gegenüber der Auflauffläche des Schiebers im Schieber oder im Kugelstangenschaft ein den Schieber an dieser Seite von seiner Anlage federnd abhebendes Federglied, beispielsweise ein Federbolzen oder ein gleitfähiges Elastomer, eingefügt wird.

Zur Betätigung des Schiebers kann ein durch einen seitlichen Durchbruch des Kugelstangenschaftes hindurchgreifender Schieberhebel dienen, der wiederum in der sichernden Lage des Schiebers verriegelt werden kann.

In Verbindung mit dem sichernden Schieber beziehungsweise auch dem Schieberhebel kann eine weitere Sicherheitsmaßnahme durchgeführt werden, nämlich das Kuppeln des Anhängers durch Auflegen der Zugkugelkupplung auf die Kugel der Kugelstange nur dann zur ermöglichen, wenn die Kugelstange sicher in ihrer Halterung fixiert ist, und auch ein Herausnehmen des Kugelstangenschaftes aus der Halterung nur dann möglich ist, wenn die Zugkugelkupplung von der Kupplungskugel abgenommen wurde.

Eine erste Lösung dieser zusätzlichen Sicherheitsmaßnahme geht davon aus, daß an der, der Kupplungskugel abgewandten Seite des Kugelstangenschaftes ein Öffnungshebel gelagert ist, der als einarmiger Hebel mit dem Schieberhebel verbunden ist und sich bis unterhalb der Kupplungskugel, dort den Schaft umgreifend, erstreckt.

Die Grundidee dieses Lösungsvorschlages ist die, daß unter Beibehaltung der bisherigen Erfindungsmerkmale der Schieberhebel durch den mit ihm verbundenen Öffnungshebel so arretiert wird, daß er nur dann betätigt werden kann, wenn der Öffnungshebel zu verschwenken ist, was wiederum nur dann möglich ist, wenn die Zugkugelkupplung von der Kupplungskugel abgenommen ist. Der mit dem Schieberhebel verbundene Öffnungshebel dient gleichzeitig als verlängerter beziehungsweise übersetzter Krafthebel für den Schieberhebel, so daß eine spielend leichte Betätigung des Schieberhebels möglich ist.

Einer Variante dieser Erfindung nach kann der Durchbruch, wie auch der durch den Durchbruch hindurchgreifende Schieberhebel, auf der der Kupplungskugel zugewandten Seite des Kugelstangenschaftes, also nicht nur seitlich angebracht sein, wobei auch der gegebenenfalls abgekröpfte Schieberhebel sich als Öffnungshebel bis unterhalb der Kupplungskugel erstrecken kann.

Diese erste Möglichkeit sieht über den Öffnungshebel eine Verwendung des zuvor beschriebenen Schieberhebels vor. Da nun jedoch die zusätzliche Sicherung beim Schieberhebel entfallen kann, könnte auch als weitere Variante ein zweiarmiger Öffnungshebel vorgesehen werden, der direkt in den Schieber eingreift und ihn beim Verschwenken des Öffnungshebels zurückzieht. Dieses Verschwenken des Öffnungshebels beziehungsweise das Zurückziehen des Schiebers ist jedoch, wie auch zuvor beschrieben, nur dann möglich, wenn die Zugkugelkupplung von der Kupplungskugel abgenommen wurde. Beide Male also ist durch diese Konstruktion gesichert, einmal, daß die Kupplungkugel nur dann aufgesetzt werden kann, wenn sich der Öffnungshebel in der der sichernden Stellung des Schiebers befindlichen Stellung befindet, wie auch, daß der Kugelstangenschaft nur dann aus der Halterung herausgenommen werden kann, wenn die Zugkugelkupplung von der Kupplungskugel abgenommen ist. Zudem läßt sich in jedem Falle durch diesen Öffnungshebel eine spielend leichte Betätigung des Schiebers erreichen.

Ein ähnlicher Hebel, der ebenfalls wie der erfindungsgemäße Öffnungshebel den Kugelstangenschaft bei der Kupplungskugel umgreift, ist als Schwenkhebel in der EP-A 93 795 angegeben. Im Gegensatz zu dem erfindungsgemäßen Öffnungshebel handelt es sich bei diesem Schwenkhebel lediglich um die passive Sicherung eines Sperrelementes, beispielweise indem sich dieser Schwenkhebel in der Sicherungsstellung über die Einschiebeöffnungen eines Sperrbolzens legt. Der Öffnungs hebel nach der Erfindung hingegen ist direkt oder über einen Schieberhebel mit dem erfindungsgemäßen Sperrelement, in diesem Falle dem Schieber, verbunden, ist also gleichfalls als aktives Sperrelement anzuzusehen. Die direkte oder indirekte formschlüssige Verbindung dieses Öffnungshebels mit dem Schieber signalisiert damit nicht nur die Stellung des Schiebers in der Hülse, sondern stellt auch eine weitere zusätzliche aktive Sicherung dieses Sperrelementes dar.

Eine weitere Möglichkeit der Realisierung dieser zusätzlichen Sicherungsmaßnahme ergibt sich nach der Erfindung dadurch, daß der gesamte Kugelstangenschaft einschließlich der Kupplungskugel in Fortsetzung der den Schieber aufnehmenden axialen Bohrung durchbohrt ist und daß über einen im Kugelkopf längsverschiebbar untergebrachten, federbelasteten Sicherungsbolzen ein in die Schaftbohrung eingefügtes Druck/Zugelement auf die Stirnseite des Schiebers aufgedrückt ist.

Bei dieser Lösung kann der Sicherungsbolzen sowohl über das Druck/Zugelement zur Sicherung des Schiebers, bei der der Schieber also, zur sicheren Anlage des Kugelstangenschaftes an den Riegel der Hülse, zwischen den Kugelstangenschaft und die Auflauframpe eingefügt ist, dienen, wie auch zum Signalisieren der korrekten Betriebslage des Kugelstangenschaftes. Beim Einschieben des Kugelstangenschaftes in die Hülse wird der Schieber durch Anschlag des Schieberkopfes an den Auflaufbock beziehungsweise die Auflauframpe zurückgeschoben, wodurch über das eingefügte Druckelement der Sicherungsbolzen oben aus der Kupplungskugel heraustritt. Erst dann, wenn der Schieber in seiner sichernden Lage zwischen Kugelstangenschaft und Auflauframpe angelangt ist, wird der Sicherungsbolzen wieder durch das Zugelement zurückgezogen, wodurch also die korrekte Lage des Schiebers signalisiert wird. Gleichzeitig jedoch verhindert dieser Sicherungsbolzen auch, befindet er sich nicht in seiner korrekten Betriebslage, steht also noch über die Kupplungskugel hinaus, das Aufsetzen der Zugkugelkupplung, so daß Fehlmanipulationen auf jeden Fall verhindert sind. Hierbei wird selbstverständlich auch verhindert, daß die Kugelstange aus ihrer Halterung herausgenommen werden kann, solange sich noch die Zugkugelkupplung auf der Kupplungskugel befindet, da dann der Sicherungsbolzen nicht nach oben aus der Kupplungskugel heraustreten kann.

Auch hier trifft wieder zu, daß diese Vorrichtung eine eindeutige Sicherung der Betriebslage des Schiebers darstellt und somit eine zusätzliche Sicherung des Schieberhebels nicht mehr notwendig erscheint. Diese zusätzliche Sicherung des Schieberhebels könnte damit entfallen, wodurch die Vorrichtung nach der Erfindung nicht nur billiger, sondern auch gewichtsmäßig leichter wird.

Ein vollkommener Wegfall des Schieberhebels kann sogar einem weiteren Erfindungsmerkmal nach dadurch erreicht werden, daß der Sicherungsbolzen mit Eingriffsmitteln (Schlitzen, Gewinde etc.) zum Verbinden mit einer Auszugsvorrichtung versehen ist, daß also das Zurückziehen des Schiebers über das in den Kugelstangenschaft eingefügte Zugelement erfolgen kann. Als Auszugsvorrichtung kann hierbei eine einfache mit einem Handgriff versehene Schraube, die in den Sicherungsbolzen einzuschrauben ist, dienen oder aber, zur Erleichterung des Ausziehens, auch eine auf die Kupplungskugel aufzusetzende Hebelvorrichtung.

In einer ersten Variante dieses Erfindungsgedankens können als Druckelement Kugeln, die über eine Druckstange auf den Schieber einwirken, in die Schaftbohrung eingefügt sein. Als Zugelement wird nach der Erfindung vorgeschlagen, die Kugeln zu durchbohren und durch diese Kugelbohrungen ein den Schieber mit dem Sicherungsbolzen verbindendes Zugseil hindurchzuführen.

Eine weitere Möglichkeit zur Realisierung des Druck/Zugelementes besteht darin, einen Bowdenzug oder besser noch einen Kugelschienenzug (Flexballzug) einzusetzen. Beim Bowdenzug ergibt sich die Druckverbindung durch den umgebenden Mantel, die Zugverbindung durch den eingefügten Zugdraht. Beim Kugelschienenzug erfolgt sowohl die Druck- wie auch die Zugverbindung durch die in den Zug eingefügte Schiene, wobei sich diese Schiene nicht nur sehr leicht bewegen läßt, sondern jegliche Gleitreibung zwischen disem Druck/Zugelement und der Bohrungswandung im Kugelstangenschaft vermieden wird.

Eine weitere Möglichkeit zur Darstellung dieses Druck/Zugelementes wird nach der Erfindung darin gesehen, eine entsprechend ausgebildete Gelenkkette zu verwenden, die dadurch, daß die Kettenglieder innerhalb der Bohrung wandern können auch in der Lage ist, Druckkräfte zu übertragen. Hierbei empfiehlt es sich, um handelsübliche Gelenkketten verwenden zu können, der Bohrung einen Vierkantquerschnitt zu geben.

Es darf wiederholt werden, daß all diesen zuletzt besprochenen Lösungsmöglichkeiten gemeinsam ist, daß sie sowohl den Einführzustand des Kugelstangenschaftes in die Halterung signalisieren, daß sie das Aufsetzen der Zugkugelkupplung nur dann zulassen, wenn der Kugelstangenschaft einwandfrei in der Halterung fixiert ist und daß ein Entfernen des Kugelstangenschaftes aus seiner Haltung nur dann möglich ist, wenn die Zugkugelkupplung von der Kupplungskugel abgenommen ist.

Schließlich sieht die Erfindung auch noch ein die Hülse umfassendes Vierkantrohr, das zur einfachen Befestigung der Hülse am Fahrzeug dienen kann. Außerdem kann in diese Hülse dann auch fest eine Kugelstange eingefügt werden, wenn zwei in das Vierkantrohr einschiebbare und dort festschraubbare Gewindeplatten am Kugelstangenschaft angebracht sind.

Auf den Zeichnungen sind schematisch Ausführungsbeispiele der erfindungsgemäßen Konstruktion dargestellt, und zwar zeigen:

Fig. 1 einen Längsschnitt der die Grundlage der Erfindung bildenden Kugelstange mit Halterung in einer vertikalen und

Fig. 2 in einer horizontalen Schnittlage.

Fig. 3 bis Fig. 7 verschiedene Ansichten um den Schieberkopf,

Fig. 8 eine Ausführung mit Öffnungshebel,

Fig. 9 wie auch Fig. 10 eine Ausführung mit durchbohrtem Schaft und

Fig. 11 eine Ausführung mit von der Hülse hervorstehenden Haken.

Am Heck eines Fahrzeuges ist eine Hüsle 1, die in ein Vierkantrohr 2 eingeschraubt ist, angebracht. Die Hüsle weist am jenseits der Einführöffnung liegenden Ende unterseitig eine Auflauframpe 3 (Auflaufbock) auf. Dieser Auflauframpe 3 etwa gegenüber ist das Hülsenende oberseitig durch einen Riegel 4 bestimmt. Vorderseitig weist diese Hülse 1 an den beiden seitlichen Vorderkanten halbrunde Aussparungen 5 (gestrichelt eingezeichnet) auf. In diese so geformte Hülse 1 ist eine Kugelstange 6 mit ihrem Kugelstangenschaft 7 einzuführen. Der Kugelstangenschaft 7 weist an seinem Ende oberseitig eine Ausnehmung 14 auf, die sich bei in die Hülse 1 eingefügter Kugelstange 6 über den Riegel 4 beziehungsweise hinter das Ende der Hülse 1 legt. Um dieses Einführen des Kugelstangenschaftes 7 in die Hülse 1 zu gestatten, ist der Kugelstangenschaft 7 unterseitig zumindest in Höhe des Riegels 4 abgeschrägt (9), so daß die Höhe des Schaftendes geringer ist als der Zwischenraum zwischen der Unterseite der Hülse 1 und dem Riegel 4. Durch diese Ausbildung wird nicht nur das Einführen des Kugelstangenschaftes 7 in die Hülse 1 möglich, sondern es ergibt sich damit auch ein äußerst geringer Einbauraum der gesamten Vorrichtung. Das Einführen des Kugelstangenschaftes beziehungsweise das Hinführen in die Betriebslage wird außerdem noch dadurch erleichtert beziehungsweise erzwungen, daß das Schaftende parallel zum Riegel 4 beziehungsweise zur Auflauframpe 3 keilförmig ausgebildet ist.

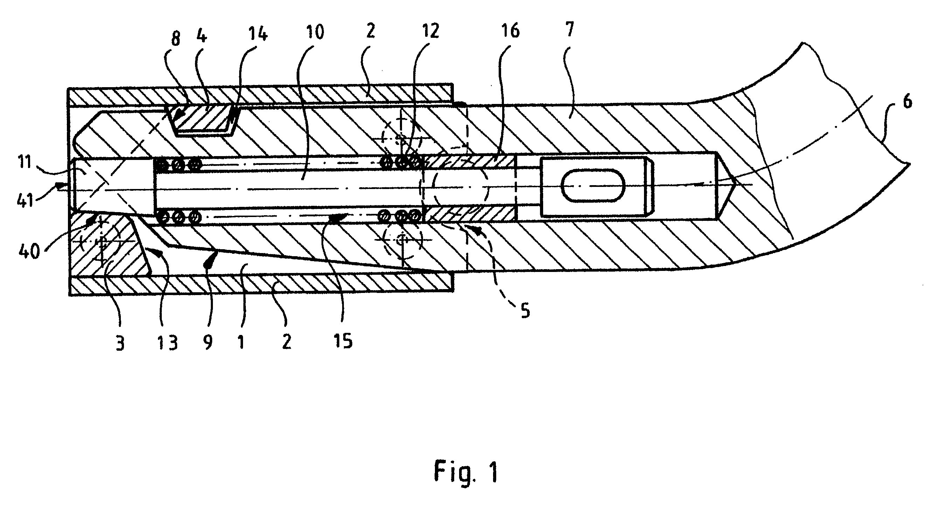

Beim Einführen des Kugelstangenschaftes 7 schlägt ein Schieber 10 mit seinem Schieberkopf 11 an die Vorderseite 13 des Auflaufbocks beziehungsweise der Auflauframpe 3 an, wodurch der Schieber gegen die Kraft einer ihn belastenden Feder 12 in einer hintere Endlage zurückgedrückt wird. Durch die Schräge der Vorderseite 13 des Auflaufbocks beziehungsweise der Auflauframpe 3 wird im weiteren Verlauf der Einführbewegung das Schaftende nach oben geführt, bis sich die Ausnehmung 14 über den Riegel 4 legt und gleichzeitig auch der Schieber 10 durch die Kraft der ihn belastenden Feder 12 sich nach vorne in die in Fig. 1 gezeigte Lage verschiebt. In dieser Lage ist die Kugelstange 6 sowohl gegen Zug - entgegen der Einführrichtung - wie auch gegen Druck - in Einführrichtung - gesichert, da der vorgeschobene Schieber 10 diese eingerastete Stellung des Kugelstangenschaftes 7 sichert. Allerdings wäre diese Verbindung nicht klapperfrei. Eine klapperfreie Verbindung wird durch eine Verspannung des Kugelstangenschaftes 7 in der Hülse 1 erreicht, dadurch, daß sich zwei seitlich am Kugelstangenschaft als Anschlag angeordnete Rundbolzen in die halbrunden Aussparungen 5 der Hülse 1 legen und der Kugelstangenschaft 7 damit zwischen dieser Lagerung der Rundbolzen an der Vorder seite der Hülse 1 und der Rückseite des Riegels 4, an den sich die Seite 8 der Ausnehmung 14 mit ihrer Schräge anlegt, verspannt ist. Diese Verspannung wird dadurch bewirkt, daß der Schieberkopf 11 rampenförmig ausgebildet ist, also sich durch die Kraft der Feder 12 auf die Auflauframpe 3 aufschiebt und damit den Kugelstangenschaft 7 in Richtung auf den Riegel 4 (in der Zeichenebene nach oben) verschiebt. Hierbei gleitet die Seite 8 der Ausnehmung 14 mit ihrer Schräge auf einer entsprechenden rückseitigen Schräge des Riegels 4 auf, wodurch der Kugelstangenschaft 7 in die Hülse 1 hineingezogen beziehungsweise zwischen der halbrunden Aussparung 5 und diesem Riegel 4 verspannt wird. Selbstverständlich kann der Anschlag auch in anderer Form ausgeführt werden, beispielsweise daß Keile in entsprechende Aussparungen eingreifen, oder im einfachsten Fall, daß plane Anschläge an der Vorderkante der Hülse anschlagen. Dieser Anschlag kann in Längsrichtung justierbar am Kugelstangenschaft angebracht sein, um die oben angeführte einwandfreie Verspannung zwischen diesem Anschlag und dem Riegel 4 zu erreichen.

Es sei hier gleich angemerkt, daß selbst bei einem Bruch der Feder 12 die Kugelstange 6 noch sicher in der Hülse 1 gehalten ist, da die in Fig. 1 gezeigte Lage des Schiebers 11 durch noch zu beschreibende Sicherungsmittel beibehalten wird. Selbst ein geringfügiges Zurückweichen des Schiebers 10 ändert an dieser sicheren Lage der Kugelstange 6 nichts, da der Kugelstangenschaft 7 durch das Zwischenfügen des Schieberkopfes 11 zwischen die Auflauframpe 3 und die Innenseite der im Kugelstangenschaft 7 vorgesehenen Bohrung 15, wenn dann auch möglicherweise nicht mehr klapperfrei, gehalten wird.

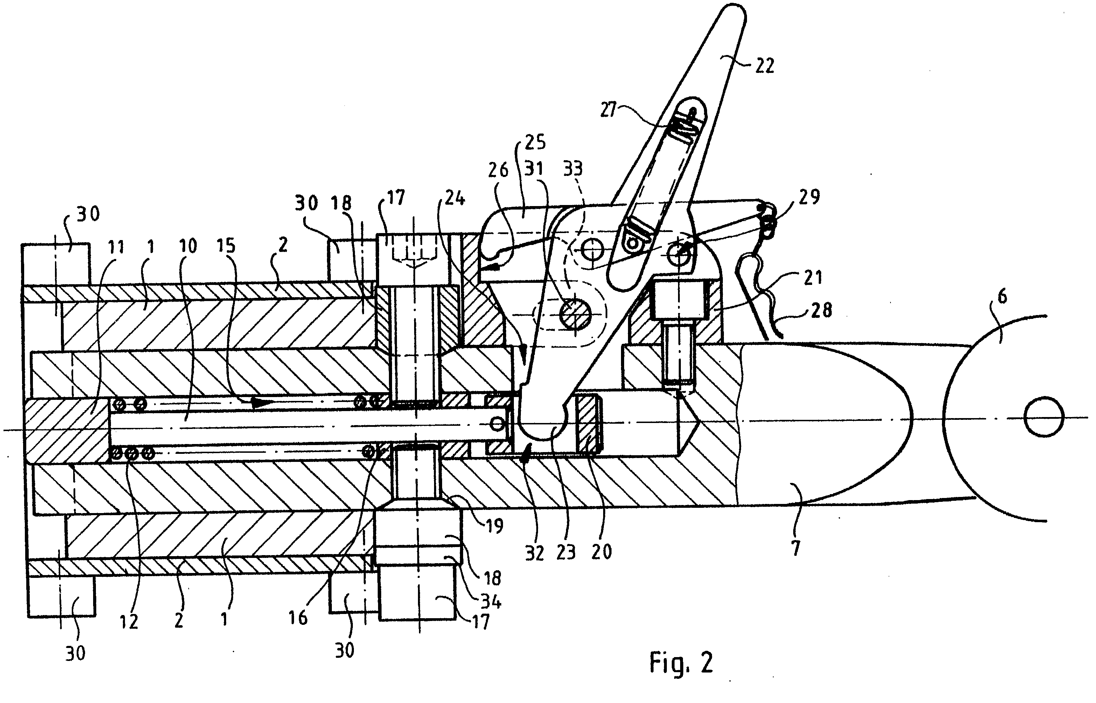

Zur Führung des Schiebers 10 ist in die Längsbohrung 15 im Kugelstangenschaft 7 ein Schiebelager 16 eingefügt. Dieses Schiebelager 16 bildet gleichzeitig das Gegenlager für die, den Schieber 10 belastende Feder 12. Das Schiebelager 16 ist, wie Fig. 2 zeigt, durch zwei Schraubbolzen 17 in seiner Lage gesichert. Diese Schraubbolzen 17 führen Exzenterhülsen 18, die mit einem Konus 19 in einen entsprechenden Sitz im Kugelstangenschaft 7 eingreifen. Durch Verdrehen dieser Exzenterhülsen 19, wozu an ihnen Schlüsselflächen 34 vorgesehen sind, kann die optimale Spannlage des Kugelstangenschaftes 7 relativ zum Riegel 4 auf einfache Art und Weise eingestellt werden. Der Formschluß dieser Exzenterhülsen 18 mit dem Kugelstangenschaft 7 wird jeweils durch den Konus 19 herbeigeführt.

Jenseits des Schieberkopfes 11 ist am Schieber 10 ein Schieberkloben 20 mit einem Langloch 32 angebracht, in das ein in einem Gehäuse 21 geführter Schieberhebel 22 mit einem Hebelnocken 23 eingreift. Das Langloch 32 des Schieberklobens 20 ist in Bewegungsrichtung des Schiebers 10 deutlich größer als der Hebelnocken 23, um eine Längsverschiebung des Schiebers 10 nicht zu zu behindern. Der Schieberhebel 22 durchgreift einen Durchbruch 24 im Kugelstangenschaft 7, der durch das Gehäuse 21 abgedeckt wird. Über das Gehäuse 21 kann selbstverständlich in an sich bekannter Weise eine Manschette (nicht eingezeichnet) übergezogen werden, um das Eindringen von Schmutz und Feuchtigkeit zu verhindern.

Das Gehäuse 21 ist fest mit dem Kugelstangenschaft 7 verbunden, in diesem Fall verschraubt. Der Kugelstangenschaft 7 mit dem Schieber 10 und dem Schieberhebel 22 bildet also über das Gehäuse 21 eine aus der Hülse 1 herausnehmbare Einheit. Am Schieberhebel 22 ist verschwenkbar eine Sperrklinke 25 angeordnet, die sich im sichernden Zustand vor eine Wandung 26 des Gehäuses 21 legt. In diese Stellung wird die Sperrklinke 25 geführt und auch in dieser Stellung gehalten durch eine Zugfeder 27. Als weitere Sicherung ist eine Sicherungsfeder 28 vorgesehen, die in eine gemeinsame Bohrung 29 durch den Schieberhebel 22 und das Gehäuse 21 einzufügen ist und somit die Verschwenkbewegung sowohl von der Sperrklinke 25 wie auch vom Schieberhebel 22 verhindert.

Beim Einführen des Kugelstangenschaftes in die Hülse 1 befindet sich die Sperrklinke 25 oberhalb der Gehäusewandung 26, so daß der Schieberhebel 22 verschwenkbar ist. Beim Einschiebvorgang wird, wie oben beschrieben, der Schieber 10 in der Längsbohrung 15 in seine hintere Endlage zurückgedrückt und dabei auch der Schieberhebel 22 verschwenkt. Hat der Kugelstangenschaft 7 seine eingeführte Endlage erreicht, schnellt der Schieber 10 durch die Kraft der Feder 12 in die in den Zeichnungsfiguren dargestellte Endlage, wobei der Schieberhebel 22 ebenso wie die Sperrklinke 25, durch einen am Gehäuse 21 geführten Auswerfer-Schieber 33, ebenfalls in die gezeichnete Lage geführt werden. Die Lage des Kugelstangenschaftes 7 beziehungsweise der Kugelstange 6 in der Hüle 1 ist damit eindeutig festgelegt und zudem der Kugelstangenschaft klapperfrei in der Hülse 1 verspannt.

Zum Herausnehmen der Kugelstange 6 aus der Hülse 1 muß lediglich die Sperrklinke 25 verschwenkt und sodann durch eine Schwenkbewegung des Schieberhebels 22 der Schieber 10 soweit zurückgezogen werden, daß der Kugelstangenschaft aus dem Bereich des Riegels 4 kommt und damit herausgezogen werden kann. Diese Herausziehbewegung wird unterstützt dadurch, daß der Schieberhebel 22 in dem oben erwähnten Auswerfer-Schieber 33 gelagert ist und dieser Auswerfer-Schieber 33 mit seiner Stirnkante an der Vorderseite der Hülse 1 anschlägt, so daß durch die Vorschubbewegung des Schieberhebels 22 gleichzeitig eine Rückwärtsbewegung des Kugel stangenschaftes 7 beziehungsweise der Kugelstange 6 erreicht wird. Weiter unterstütz wird diese Bewegung der Kugelstange aus der Hülse noch dadurch, daß sich der Schieberkopf 11 an der Vorderseite 13 der Auflauframpe 3 anlegt und die Kraft der Feder 12 nunmehr versucht, die Kugelstange 6 herauszuschieben. Dadurch wird die in Einführrichtung führende Bewegung des Schieberhebels 22 kompensiert und damit das Herausnehmen der Kugelstange 6 aus der Hülse 1 sehr erleichtert.

Aus Fig. 2 sind noch Schrauben 30 ersichtlich, mit denen das die Hülse 1 umgebende Vierkantrohr 2 an der Hülse 1 festgeschraubt ist. Diese Zweiteilung erbringt den außerordentlichen Vorteil, daß das Vierkantrohr 2 in die Haltekonstruktion am Fahrzeugheck ohne größere Manipulationen eingeschweißt und sodann die präzise zu bearbeitende Hülse 1 in dieses Vierkantrohr 2 eingeschraubt werden kann. Verspannungen der Hülse 1 durch das Verschweißen der Vorrichtung am Fahrzeugheck werden dadurch mit Sicherheit vermieden. Außerdem ist es dadurch auch möglich, die gesamte Vorrichtung, also Hülse 1 mit Kugelstange 6, an dem jeweiligen Fahrzeug auszutauschen, einfach indem eine neue Hülse 1 in dieses am Fahrzeugheck angebrachte Vierkantrohr 2 eingeschraubt wird. Wirtschaftlich interessant ist, daß nunmehr in dieses Vierkantrohr 2 auch eine nicht herausnehmbare Kugelstange eingefügt werden kann, einfach indem seitlich an einem Kugelstangenschaft zwei in dieses Vierkantrohr 2 einschiebbare und dort festschraubbare Gewindeplatten angebracht werden.

Schließlich ist noch allgemein festzustellen, daß die konstruktive Grundidee der Erfindung darin zu erblicken ist, daß der Schieber innerhalb des Kugelstangenschaftes geführt wird und durch seine besondere Form und Lage eindeutig die Lage des Kugelstangenschaftes 7 in der Hülse 1 festlegt und sichert. Die Sicherung des Schiebers, also die Fixierung des Schiebers in der sichernden Stellung, bei der er zwischen den Kugelstangenschaft und die Auflauframpe eingeschoben ist, kann nunmehr auf verschiedene Art und Weise erfolgen, wobei eine Möglichkeit, nämlich die Sicherung des Schieberhebels in seiner Betriebslage, schon beschrieben ist.

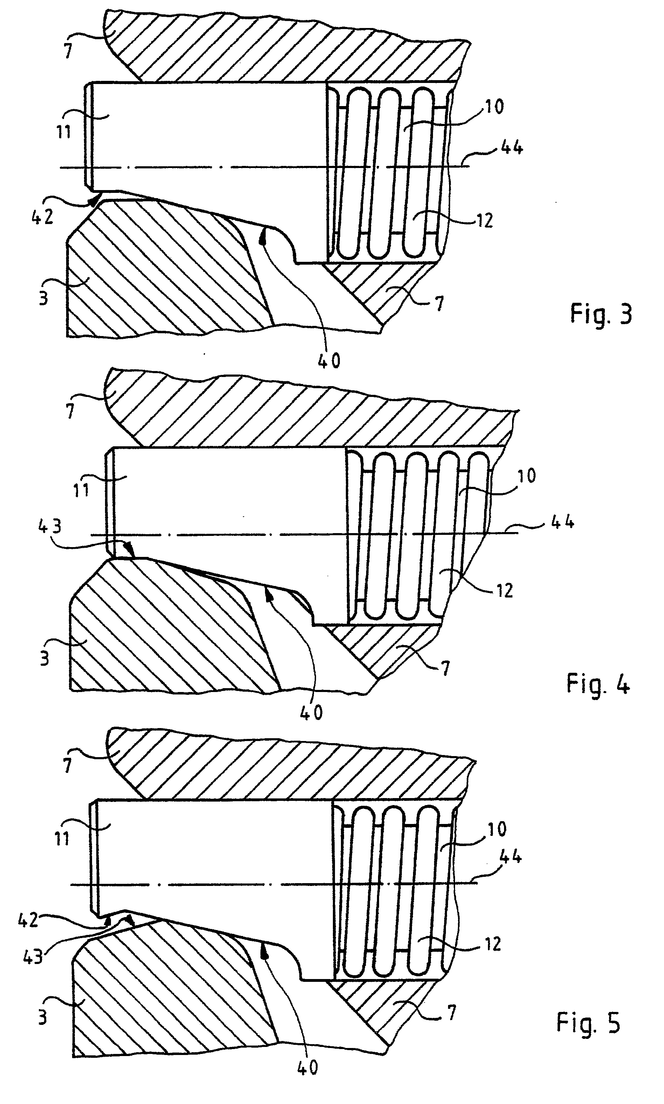

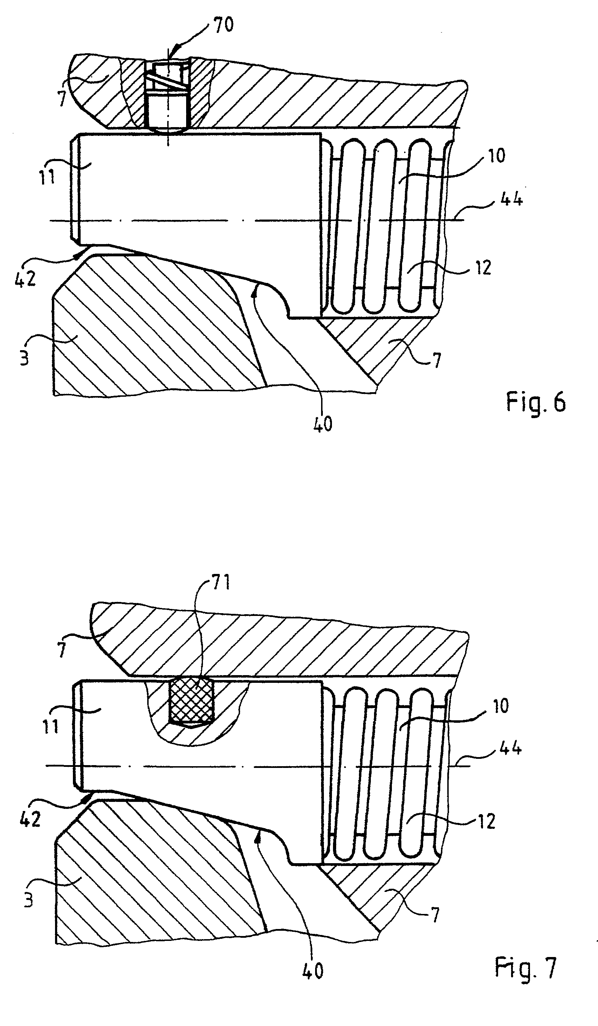

Eine weitere Möglichkeit ist in den Fig. 3 bis 5 dargestellt, wobei bei einem Bruch der Feder 12 und einem Versagen der anderweitigen Sicherung, beispielsweise über den Schieberhebel 22, der Schieber 10 seine sichernde Lage zwischen dem Kugelstangenschaft 7 und der Auflauframpe 3 doch nicht verlassen wird, weil das Endteil 42 der rampenförmigen Auflauffläche 40 des Schieberkopfes 11 wie auch eine endständige Rastfläche 43 der Auflauframpe 3 gegenüber der Steigung der Auflauframpe 3 so geneigt sind, daß selbst bei starken, senkrecht zur Achse des Schiebers 10 auftretenden Rüttelbewegungen, nicht zu einer Längsbewegung des Schiebers 10 führen. Die Fig. 3 und 4 zeigen hierbei das Endteil 42 wie auch die Rastfläche 43 mit einem Winkel von 000° zu einer durch die Achse 44 der Kugelstange 10 gelegten Ebene, die Abbildung 5 zeigt eine Ausführung, bei der diese Flächen um -015° gegenüber dieser Ebene geneigt sind. Wie entsprechende Versuche bestätigt haben, ändert auch bei starken Rüttelbewegungen der Schieber 10 seine Lage nicht mehr, wenn er, wie dies Fig. 4 zeigt, auf der Rastfläche 43 aufliegt. Dies trifft sowohl zu für die Flächen, die einen Winkel von 000° zu der durch die Achse 44 gezogenen Ebene aufweisen, wie auch für die Ausführung nach Fig. 5 mit um - 015° geneigten Flächen. Bei der letzten Ausführung ergibt sich eine Verriegelung des Schiebers 10 in der Stellung, bei der das Endteil 42 auf der Rastfläche 43 aufliegt, wobei diese Verriegelung nur durch eine zusätzliche, den Schieber auf den Riegel zu führende Kraft überwunden werden kann.

Durch diese einfache Maßnahme ist also bereits dafür gesorgt, daß selbst dann, wenn die Feder 12 gebrochen ist, also keine sichernde Funktion mehr ausüben kann und auch gleichzeitig die weitere Sicherung, beispielsweise über den Schieberhebel 22, versagt, der Schieber 10 seine sichernde Lage zwischen dem Kugelstangenschaft 7 und der Auflauframpe 3 beibehält.

Eine weitere Möglichkeit zum Sichern des Schiebers in seiner Lage zeigen die Fig. 6 und 7. Hier liegt die Neigung der Auflauframpe und diejenige der Auflauffläche des Schiebers im Bereich der Selbsthemmung, so daß, ist der Schieber in seine Endstellung verfahren, diese Selbsthemmung ein Zurückgleiten des Schiebers verhindert. Um die Ausziehkraft des Schiebers gering zu halten, werden hierbei federnde Glieder zwischen die Anlagefläche des Kugelstangenschaftes 7 und den Schieber 11 eingefügt. In der Zeichnung Fig. 6 ist ein derartiges Federglied als Federbolzen 70, in Fig. 7 als Elastomer 71 eingezeichnet.

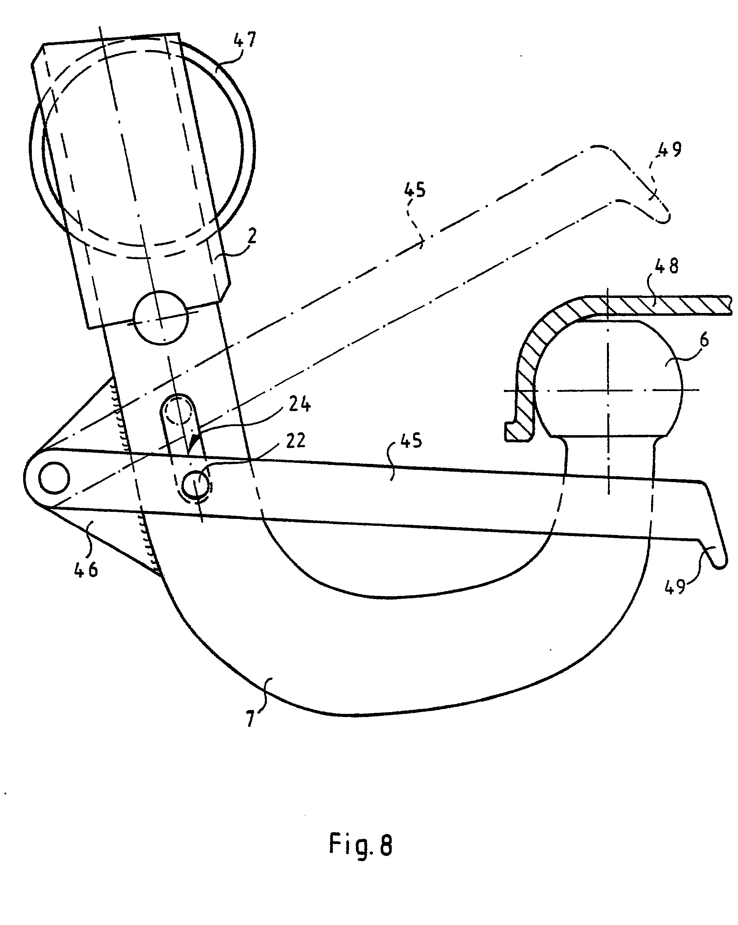

Eine weitere Sicherung dieser sichernden Lagen des Schiebers 10 zeigt Fig. 8. Die Sicherung ist hier dadurch realisiert, daß der Schieberhebel 22 mit einem Öffnungshebel 45 verbunden ist, der jenseits der Kupplungskugel 6 am Kugelstangenschaft 7 über einen Lagerbock 46 angelenkt ist. Da der Schieberhebel 22, wie aus Fig. 2 ersichtlich und beschrieben ist, zum Herausführen des Kugelstangenschaftes 7 aus der Hülse 1, die in der Zeichnung nach Fig. 8 über das Vierkantrohr 2 an einem Träger 47 befestigt ist, in Richtung auf die Hülse 1 zu bewegen ist, muß der Öffnungshebel 45 zum Herausnehmen des Kugelstangenschaftes 7 aus der Hülse 1 in die gestrichelt eingezeichnete Lage verschwenkt, also über die Kupplungskugel 6 hinweg verschwenkt werden. Dies gelingt jedoch nur, wenn auf die Kuppungskugel 6 nicht eine Zugkugelkupplung 48 aufgesetzt ist. Um ein Ausbiegen des Öffnungshebels 45 beim Verschwenken in die gestrichelt eingezeichnete Lage zu vermeiden, soll der Öffnungshebel 45 bei einer Handhabe 49 den Kugelstangenschaft 7 umgreifen.

Bei dieser Variante der erfindungsgemäßen Lösungsmöglichkeiten ist der Öffnungshebel 45 mit dem Schieberhebel 22, der die beschriebenen, in Fig. 8 gezeigten Sicherungseinrichtungen aufweist, verbunden. Eine weitere, nicht dargestellte Variante, besteht darin, daß der Öffnungshebel 45 nicht als einarmiger Hebel jenseits der Kupplungskugel 6 am Kugelstangenschaft 7, sondern an einem zur Kupplungskugel 6 zugewandten Lagerbock angelenkt ist und als zweiarmiger Hebel direkt über den Durchbruch 24 in den Schieber 10 eingreift. Der Wegfall der Sicherungen beim Schieberhebel 22 erscheint, durch die äußerst stabile Sicherung mittels des Öffnungshebels 45, durchaus zulässig.

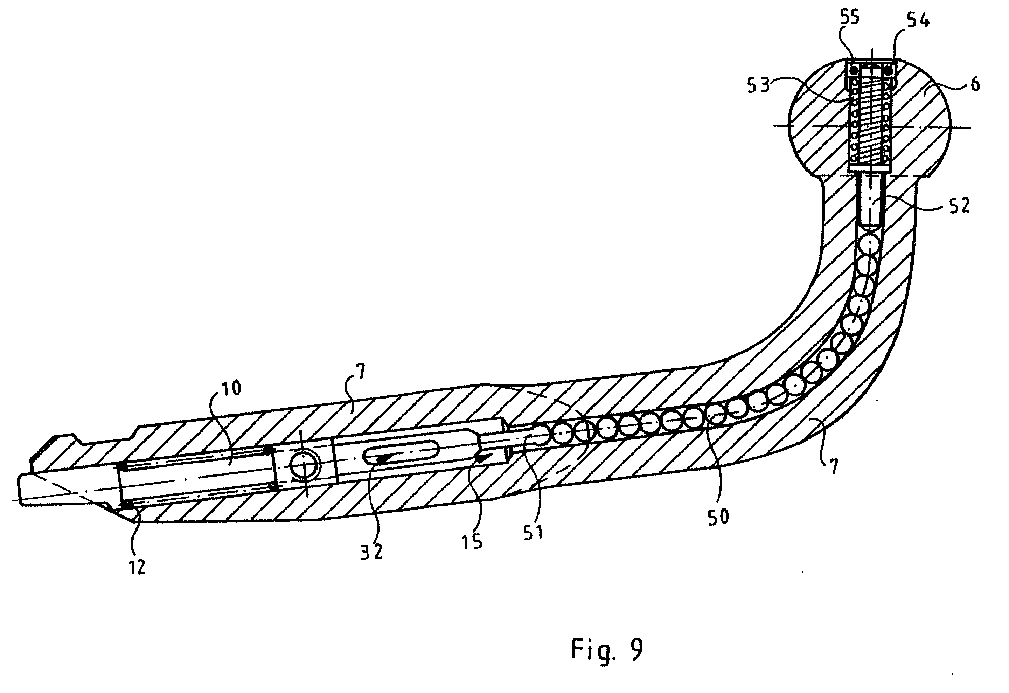

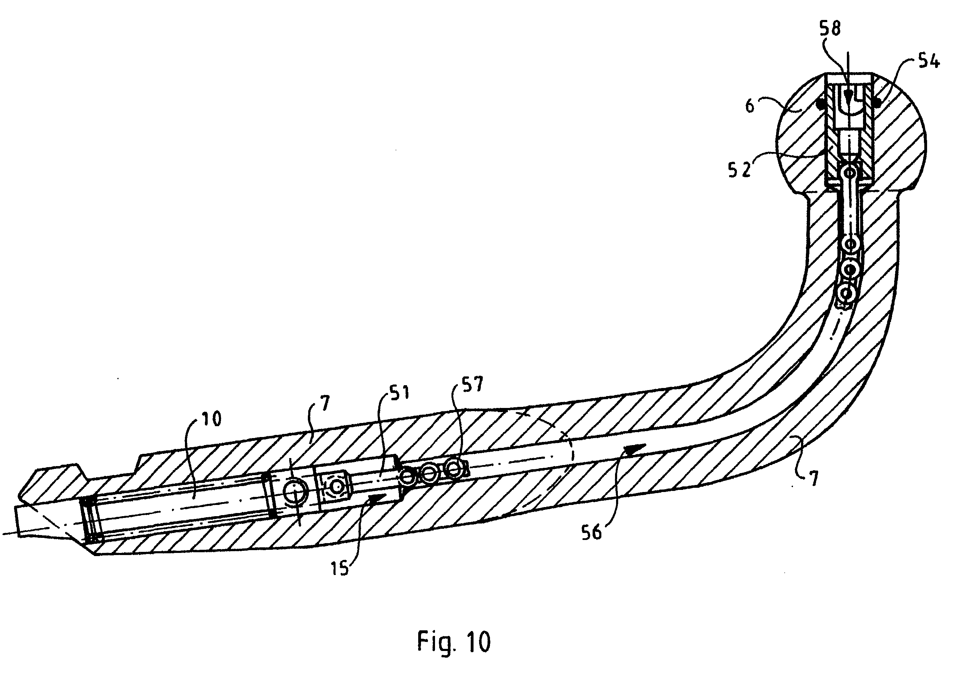

Eine weitere Variante zeigen die Fig. 9 und 10, bei der der Kugelstangenschaft 7 einschließlich der Kupplungskugel 6 in Fortsetzung der den Schieber 10 aufnehmenden axialen Bohrung 15 durchbohrt ist, so daß in diese Bohrung Druck/Zugelemente eingefügt werden können. Bei der Darstellung nach Fig. 9 sind dies Kugeln 50, die einerseits auf einer Druckstange 51, die mit dem Schieber 1 verbunden ist, und andererseits auf einem längsverschiebbar im Kugelkopf 6 untergebrachten federbelasteten Sicherungsbolzen 52 aufliegen. Im Betriebszustand, also bei vorgeschobenem, zwischen dem Kugelstangenschaft 7 und der Auflauframpe 3 zwischengefügtem Schieber 10 drückt die Feder 53 den Sicherungsbolzen 52 in die Kupplungskugel 6 hinein, so daß sich die in Fig. 9 dargestellte Lage ergibt. Befindet sich der Schieber 10 hingegen nicht in dieser Betriebslage, steht der Sicherungsbolzen 52 über die Kupplungskugel 6 hinaus, signalisiert also, daß der Schieber seine korrekte Endlage noch nicht erreicht hat. Gleichzeitig wird das Aufsetzten der Zugkugelkupplung 48 durch diesen überstehenden Sicherungsbolzen 52 verhindert. Um das Eindringen von Wasser und Schmutz etc. in die Längsbohrung des Kugelstangenschaftes 7 zu vermeiden, ist der Sicherungsbolzen durch einen O-Ring 54 abgedichtet, der in eine Verschraubung 55 eingelegt ist.

Um auch eine Zugverbindung zwischen dem Sicherungsbolzen 52 und dem Schieber 10 herzustellen, wird nach der Erfindung weiterhin vorgeschlagen, daß die Kugeln 50 zur Aufnahme eines Zugseils durchbohrt sind.

Gezeigt in Fig. 9 ist das Langloch 32 im Schieber 10, in das beispielsweise der in Fig. 2 gezeigte Schieberhebel 22 oder eine sonstige Verschiebevorrichung eingreifen kann. Eine zusätzliche Sicherung dieser Schiebevorrichtung erscheint hiernicht notwendig, da die Betriebslage des Schiebers 10 durch die Druck/Zugelemente 50 zusammen mit der aufgesetzten Zugkugelkupplung 48 gesichert ist.

Fig. 10 zeigt schließlich noch eine Ausführung, bei der in die Längsbohrung 56 eine Gelenkkette 57 eingesetzt ist. Auch hier ist wiederum eine Druckstange 51 vorgesehen, wie auch ein Sicherungsbolzen 52, wobei hier der Sicherungsbolzen 52 mit Schlitzen 58, in die in Form eines Bajonettverschlusses eine Ausziehvorrichtung eingesetzt werden kann, versehen ist. Durch diese Maßnahme kann auf eine Öffnungsvorrichtung, die den Schieber 10 zurückschiebt, ganz verzichtet werden, da nun lediglich über den Sicherungsbolzen 52 und das Druck/Zugelement, die Kette 57, der Schieber zurückgezogen werden muß. Dadurch ist eine äußerst kompakte und zuverlässig wirkende Vorrichtung gegeben, bei der sowohl ein ungewolltes Lösen des Kugelstangenschaftes aus der Halterung zuverlässig verhindert wird, bei der aber auch das Entfernen des Kugelstangenschaftes aus der Halterung keine Schwierigkeiten bereitet. Zudem läßt diese erfindungsgemäße Konstruktion das Entfernen des Kugelstangenschaftes aus der Halterung nur dann zu, wenn die Zugkugelkupplung 48 von der Kupplungskugel 6 abgenommen ist beziehungsweise sichert zuverlässig den Sitz des Kugelstangenschaftes in der Hülse 1, wenn diese Zugkugelkupplung 48 auf der Kupplungskugel 6 aufliegt.

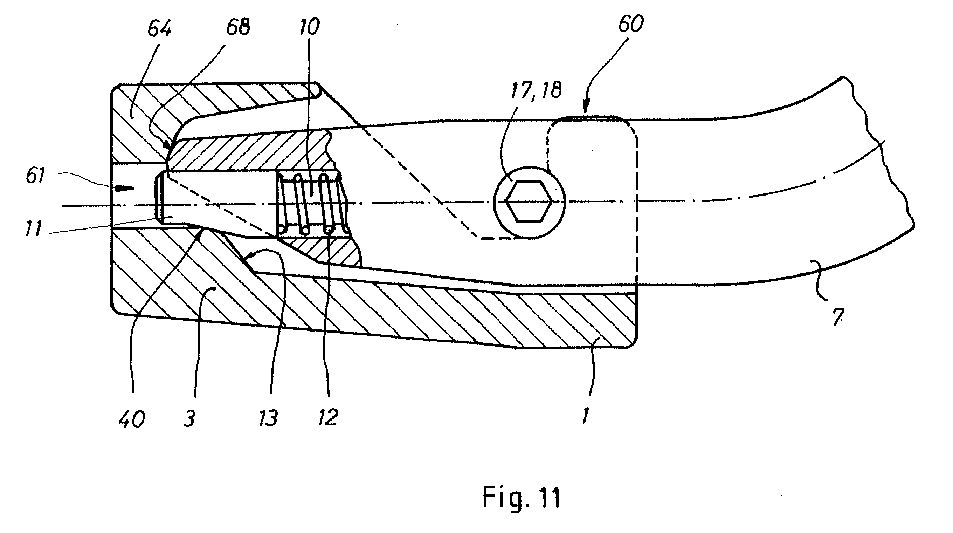

In den beschriebenen Beispielen nach den Fig. 1 bis 10 ist stets eine Zugverspannung des Kugelstangenschaftes in der Hülse 1 vorgesehen. Jedoch ist auch eine Druckverspannung, wie dies beispiesweise Fig. 11 zeigt, möglich. Hier stehen von der Hülse 1 Haken 60 vor, in die sich die vom Schaft abstehende Bolzen beziehungsweise in die sich die durch die Schraubbolzen 17 geführten Exzenterhülsen 18 einlegen können. Auch hier wird beim Einführen des Kugelstangenschaftes 7 in die Hülse 1 der Schieber 10 durch Anschlag des Schieberkopfes 11 an die Vorderseite 13 des Auflaufbocks beziehungsweise der Auflauframpe 3 zurückgeschoben, bis etwa die in Fig. 11 gezeigte Lage erreicht ist und der Schieber in die Öffnung 61 zwischen der Auflauframpe 3 und den Riegel 64 eindringen kann. Durch das Vorfahren des Schieberkopfes 11 beziehungsweise das Aufgleiten der Schräge 40 auf die Auflauframpe 3 wird auch hier wiederum der Kugelstangenschaft 7 von der Auflauframpe 3 wegbewegt beziehungsweise in Richtung auf den Riegel 64 geführt. Hierbei gleitet die Verspannfläche 68 des Kugelstangenschaftes 7 an der vorderseitigen geneigten Fläche des Riegels auf, wobei ein den den Kugelstangenschaft 7 durchquerenden Bolzen in die Haken 60 pressender Druck ausgeübt, beziehungsweise der Kugelstangenschaft 7 in der Hülse verspannt wird.

**Patentansprüche**

1. Anhängevorrichtung für Fahrzeuge, insbesondere für Kraftfahrzeuge, gebildet aus einer am Fahrzeug angebrachten Halterung, in der eine Kugelstange (6) lösbar zu befestigen ist, wobei die Halterung eine den Kugelstangenschaft (7) aufnehmende Hülse (1) ist, die vorderseitig Anschlagflächen für seitlich vom Schaft abstehende Bolzen (17) und rückseitig eine Verspannrampe für eine endständig am Kugelstangenschaft vorgesehene Verspannfläche sowie eine Auflauframpe (3) für die Auflauffläche (40) eines am Kugelstangenschaft verschiebbar geführten Schiebers (10) aufweist,
dadurch gekennzeichnet,
daß die Anschlagflächen die Stirnkanten der Hülse sind und die Verspannrampe für die Verspannfläche des Kugelstangenschaftes die nach innen geneigte rückseitige Fläche eines die Hülse durchquerenden Riegels (4)
und die Auflauframpe (3) für die Auflauffläche (40) des Schiebers ein etwa dem Riegel gegenüber angeordneter Auflaufbock ist
und daß der Schieber (10) - vorzugsweise zentrisch - im Kugelstangenschaft (7) gelagert, mit der am Schieberkopf (11) vorgesehenen Auflauffläche (40) am Ende des Kugelstangenschaftes (7 an dessen Unterseite frei aus dem Kugelstangenschaft (7) austritt und durch eine in Richtung auf das Schaftende drückende Federkraft (Feder 12) belastet und in der Endstellung verriegelbar ist.

2. Anhängevorrichtung nach Anspruch 1,
dadurch gekennzeichnet,
daß die Verspannfläche des Kugelstangenschaftes eine quer verlaufende Nut mit nach innen geneigten Flanken ist.

3. Anhängevorrichtung nach Anspruch 1 oder 2,
dadurch gekennzeichnet,

daß das Schaftende an der zur Auflauframpe (3) weisenden Seite keilförmig ausgebildet und unterseitig abgeschrägt (9) ist.

4. Anhängevorrichtung für Fahrzeuge, insbesondere für Kraftfahrzeuge, gebildet aus einer am Fahrzeug angebrachten Halterung, in der eine Kugelstange (6) lösbar zu befestigen ist, wobei die Halterung eine den Kugelstangenschaft (7) aufnehmende Hülse (1) ist, die vorderseitig Anschlagflächen für seilich vom Schaft abstehende Bolzen (17) und rückseitig eine Verspannrampe für eine endständig am Kugelstangenschaft vorgesehene Verspannfläche (68) sowie eine Auflauframpe (13) für die Auflauffläche (40) eines am Kugelstangenschaft verschiebbar geführten Schiebers (10) aufweist.
dadurch gekennzeichnet,
daß die Anschlagflächen von der Hülse hervorstehende Haken (60) sind
und die Verspannrampe für die Verspannfläche (68) des Kugel stangenschaftes die nach innen geneigte vorderseitige Fläche eins quer in die Hülse eingefügten Riegels (64) und die Auflauframpe (13) für die Auflauffläche (40) des Schiebers (10) ein etwa dem Riegel gegenüber angeordneter Auflaufbock ist und daß der Schieber (10) - vorzugsweise zentrisch - im Kugelstangenschaft (7) gelagert,
mit der am Schieberkopf (11) vorgesehenen Auflauffläche (40) am Ende des Kugelstangenschaftes (7) an dessen Unterseite frei aus dem Kugelstangenschaft (7) austritt und durch eine in Richtung auf das Schaftende drückende Federkraft (Feder 12) belastet und in der Endstellung verriegelbar ist.

5. Anhängevorrichtung nach Anspruch 1 oder 4,
dadurch gekennzeichnet,
daß die seitlich vom Schaft abstehenden Bolzen zwei seitlich am Kugelstangenschaft (7) angeordnete Rundbolzen sind, wobei zweckmäßigerweise die Rundbolzen Exzenterhülsen (18) sind, die verdrehbar auf in den Kugelstangenschaft (7) einschraubbaren Schraubbolzen (17) angeordnet sind und mit einem Konus (19), der mit einer Riffelung versehen sein kann, in den Kugelstangenschaft (7) eingreifen.

6. Anhängevorrichtung nach Anspruch 1 oder 4,
dadurch gekennzeichnet,
daß sowohl das Endteil (42) der rampenförmigen Auflauffläche (40) des Schieberkopfes (11), wie auch eine entsprechende endständige Rastfläche (43) der Auflauframpe (3) entgegen der Rampensteigung geneigt sind.

7. Anhängevorrichtung nach Anspruch 6,
dadurch gekennzeichnet,
daß die Neigung das Endteils (42) und die entsprechende Neigung der Rastfläche (43) zwischen minus 030° und plus 010°, vorzugsweise bei 000° zu einer durch die Achse (44) der Kugelstange (7) gelegten Ebene liegt.

8. Anhängevorrichtung nach Anspruch 1 oder 4,
dadurch gekennzeichnet,
daß die Neigung der Auflauframpe und diejenige der Auflauffläche (40) des Schiebers (10) im Bereich der Selbsthemmung liegt.

9. Anhängevorrichtung nach Anspruch 8,
dadurch gekennzeichnet,
daß etwa gegenüber der Auflauffläche (40) des Schiebers (10) im Schieber (10) oder im Kugelstangenschaft (7) ein den Schieber (10) an dieser Seite von seiner Anlage federnd abhebendes Federglied (70, 71) eingefügt ist.

10. Anhängevorrichtung nach Anspruch 1 oder 4,
dadurch gekennzeichnet,
daß der Schieber (10) über einen durch einen seitlichen Durchbruch (24) des Kugelstangenschaftes (7) hindurchgreifenden Schieberhebel (22) verschiebbar ist, daß seitlich am Kugelstangenschaft (7) ein den Durchbruch (24) abdeckendes Gehäuse (21) angebracht und ein in eingeführtem Zustand der Kugelstange (6) bis zur Hülsen-Vorderkante (5) reichender Auswerfer-Schieber (33) geführt ist und daß in diesem Auswerfer-Schieber (33) der Schieberhebel (22) verschwenkbar gelagert und mittels einer federbelasteten Sperrklinke (25) im Gehäuse (21) festsetzbar ist.

11. Anhängevorrichtung nach einem oder mehreren der vorhergehenden Ansprüche,
dadurch gekennzeichnet,
daß an der, der Kupplungskugel (6) abgewandten Seite des Kugelstangenschaftes (7) ein Öffnungshebel (45) gelagert ist, der als einarmiger Hebel mit dem Schieberhebel (22) verbunden ist und sich bis unterhalb der Kupplungskugel (6), dort den Schaft (7) umgreifend, erstreckt.

12. Anhängevorrichtung nach Anspruch 11,
dadurch gekennzeichnet,
das der Durchbruch (24) wie auch der durch den Durchbruch (24) hindurchgreifende Schieberhebel (22) auf der der Kupplungskugel (6) zugewandten Seite des Kugelstangenschaftes (7) angebracht sind und daß gegebenenfalls der abgekröpfte Schieberhebel (22) sich als Öffnungshebel bis unterhalb der Kupplungskugel erstreckt.

13. Anhängevorrichtung nach Anspruch 1 oder 4,
dadurch gekennzeichnet,
daß der gesamte Kugelstangenschaft (7) einschließlich der Kupplungskugel (6) in Fortsetzung der den Schieber (10) aufnehmenden axialen Bohrung (15) durchbohrt ist und daß über einen in der Kupplungskugel (6) längsverschiebbar untergebrachten, federbelasteten Sicherungsbolzen (52) ein in die Schaftbohrung (56) eingefügtes Druck/Zugelement auf die Stirnseite des Schiebers (10) aufgedrückt ist.

14. Anhängevorrichtung nach Anspruch 13,
dadurch gekennzeichnet,
daß der Sicherungsbolzen (52) mit Eingriffsmitteln (58) (Schlitzen, Gewinde etc.) zum Verbinden mit einer Auszugsvorrichtung versehen ist.

15. Anhängevorrichtung nach Anspruch 1 oder 4,
dadurch gekennzeichnet,
daß die Hülse (1) von einem Vierkantrohr (2) umfaßt ist.

**Claims**

1. A towing arrangement for vehicles, in particular for motor vehicles, formed from a mounting which is mounted on the vehicle and in which a ball bar (6) is to be releasably fixed, wherein the mounting is a sleeve (1) which accommodates the shank (7) of the ball bar and which at the front end has abutment surfaces for pins (17) projecting laterally from the shank and at the rear end has a bracing ramp for a bracing surface provided on the shank of the ball bar at the end thereof and a run-on ramp (3) for the run-on surface (40) of a slider (10) guided slidably on the shank of the ball bar, characterised in that the abutment surfaces are the end edges of the sleeve and the bracing ramp for the bracing surface of the shank of the ball bar is the inwardly inclined rearward surface of a locking bar (4) which passes transversely through the sleeve and the run-on ramp (3) for the run-on surface (40) of the slider is a run-on block arranged substantially opposite the locking bar, and that the slider (10) is mounted preferably concentrically in the shank (7) of the ball bar, extends freely out of the shank (7) of the ball bar with the run-on surface (40) provided on the slider head (11) at the end of the shank (7) of the ball bar at the underside thereof, and is loaded by a spring force (spring 12) applying a pressing force towards the end of the shank and can be locked in the end position.

2. A towing arrangement according to claim 1 characterised in that the bracing surface of the shank of the ball bar is a transversely extending groove with inwardly inclined sides.

3. A towing arrangement according to claim 1 or claim 2 characterised in that the end of the shank is of a tapered configuration at the side which faces towards the run-on ramp (3) and is inclined (9) at its underside.

4. A towing arrangement for vehicles, in particular for motor vehicles, formed from a mounting which is mounted on the vehicle and in which a ball bar (6) is to be releasably fixed, wherein the mounting is a sleeve (1) which accommodates the shank (7) of the ball bar and which at the front end has abutment surfaces for pins (17) projecting laterally from the shank and at the rear end has a bracing ramp for a bracing surface (68) provided on the shank of the ball bar at the end thereof and a run-on ramp (13) for the run-on surface (40) of a slider (10) guided slidably on the shank of the ball bar, characterised in that the abutment surfaces are hooks (60) projecting from the sleeve and the bracing ramp for the bracing surface (68) of the shank of the ball bar is the inwardly directed surface at the front side of a locking bar (64) which is inserted transversely into the sleeve and the run-on ramp (13) for the run-on surface (40) of the slider (10) is a run-on block which is arranged substantially opposite the locking bar and that the slider (10) is mounted preferably concentrically in the shank (7) of the ball bar, extends freely out of the shank (7) of the ball bar with the run-on surface (40) provided on the slider head (11) at the end of the shank (7) of the ball bar at the underside thereof, and is loaded by a spring force (spring 12) applying a pressing force towards the end of the shank and can be locked in the end position.

5. A towing arrangement according to claim 1 or claim 4 characterised in that the pins projecting laterally form the shank are two round pins which are arranged laterally on the shank (7) of the ball bar, wherein desirably the round pins are eccentric sleeves (18) which are arranged rotatably on screw bolts (17) which can be screwed into the shank (7) of the ball bar and which engage into the shank (7) of the ball bar with a cone (19) which can be provided with knurling.

6. A towing arrangement according to claim 1 or claim 4 characterised in that both the end portion (42) of the ramp-shaped runon surface (40) of the slider head (11) and also a corresponding retaining surface (43) at the end of the run-on ramp (3) are inclined in the opposite direction to the inclination of the ramp.

7. A towing arrangement according to claim 6 characterised in that the angle of inclination of the end portion (42) and the corresponding inclination of the retaining surface (43) is between minus 030° and plus 010° preferably being 000°, relative to plane through the axis (44) of the ball bar (7).

8. A towing arrangement according to claim 1 or claim 4 characterised in that the inclination of the run-on ramp and that of the run-on surface (40) of the slider (10) is in the self-locking range.

9. A towing arrangement according to claim 8 characterised in that inserted substantially opposite the run-on surface (40) of the slider (10) in the slider (10) or in the shank (7) of the ball bar is a spring member (70, 71) which resiliently lifts the slider (10) at that side from its condition of contact.

10. A towing arrangement according to claim 1 or claim 4 characterised in that the slider (10) is displaceable by way of a slider lever (22) which engages through a lateral opening (24) in the shank (7) of the ball bar, that a housing (21) for covering the opening (24) is mounted laterally on the shank (7) of the ball bar and an ejector slider (33) which in the inserted condition of the ball bar (6) extends as far as the front edge (5) of the sleeve is guided thereon and that the slider lever (22) is mounted pivotably in the ejector slider (33) and can be fixed in the housing (21) by means of a spring-loaded locking pawl (25).

11. A towing arrangement according to one or more of the preceding claims characterised in that mounted on the side of the shank (7) of the ball bar, which is remote from the coupling ball (6), is an opening lever (45) which is connected in the form of a single-armed lever to the slider lever (22) and which extends to a position beneath the coupling ball (6), where it embraces the shank (7).

12. A towing arrangement according to claim 11 characterised in that the opening (24) and also the slider lever (22) which engages through the opening (24) are mounted on the side of the shank (7) of the ball bar, which is towards the coupling ball (6), and that the angled slider lever (22) possibly extends as an opening lever to a position beneath the coupling ball.

13. A towing arrangement according to claim 1 or claim 4 characterised in that the entire shank (7) of the ball bar including the coupling ball (6) is bored therethrough to continue the axial bore (15) which accommodates the slider (10) and that a pushing/pulling element which is inserted into the bore (56) in the shank is pressed against the end of the slider (10) by way of a spring-loaded securing pin (52) which is longitudinally slidably disposed in the coupling ball (6).

14. A towing arrangement according to claim 13 characterised in that the securing pin (52) is provided with engagement means (58) (slots, screwthread etc) for connection to an extractor device.

15. A towing arrangement according to claim 1 or claim 4 characterised in that the sleeve (1) is embraced by a square tube (2).

## Revendications

1. Dispositif d'attelage pour véhicules, notamment pour véhicules automobiles, formé d'un support qui est installé sur le véhicule et dans lequel une tige à rotule (6) doit être fixée de manière libérale, le support étant une douille (1) qui reçoit le fût (7) de la tige à rotule, présente à sa face antérieure des surfaces de butée pour des chevilles (17) saillant latéralement du fût et, à sa face postérieure, une rampe de blocage destinée à une surface de blocage prévue dans la région extrême sur le fût de la tige à rotule, ainsi qu'une rampe ascendante (3) destinée à la surface d'ascension (40) d'un coulisseau (10) guidé à coulissement sur le fût de la tige à rotule, caractérisé par le fait que les surfaces de butée sont les arêtes frontales de la douille, la rampe de blocage destinée à la surface de blocage du fût de la tige à rotule est la face postérieure, inclinée vers l'intérieur, d'une targette (4) traversant la douille, et la rampe ascendante (3) destinée à la surface d'ascension (40) du coulisseau est un sabot à pan incliné, disposé sensiblement à l'opposé de la targette; et par le fait que le coulisseau (10), monté – de préférence centralement – dans le fût (7) de la tige à rotule, sort librement du fût (7) de la tige à rotule à l'extrémité de ce fût (7) de la tige à rotule, à sa face inférieure, par la surface d'ascension (40) prévue sur la tête (11) du coulisseau, est chargé par une force élastique (ressort 12) exerçant une pression en direction de l'extrémité du fût, et peut être verrouillé dans la position extrême.

2. Dispositif d'attelage selon la revendication 1, caractérisé par le fait que la surface de blocage du fût de la tige à rotule est une rainure s'étendant transversalement, munie de flancs inclinés vers l'intérieur.

3. Dispositif d'attelage selon la revendication 1 ou 2, caractérisé par le fait que l'extrémité du fût est de réalisation cunéiforme du côté tourné vers la rampe ascendante (3), et est biseautée (9) à sa face inférieure.

4. Dispositif d'attelage pour véhicules, notamment pour véhicules automobiles, formé d'un support qui est installé sur le véhicule et dans lequel une tige à rotule (6) doit être fixée de manière libérable, le support étant une douille (1) qui reçoit le fût (7) de la tige à rotule, présente à sa face antérieure des surfaces de butée pour des chevilles (17) saillant latéralement du fût et, à sa face postérieure, une rampe de blocage destinée à une surface de blocage (68) prévue dans la région extrême sur le fût de la tige à rotule, ainsi qu'une rampe ascendante (13) destinée à la surface d'ascension (40) d'un coulisseau (10) guidé à coulissement sur le fût de la tige à rotule, caractérisé par le fait que les surfaces de butée sont des crochets (60) dépassant de la douille, la rampe de blocage destinée à la surface de blocage (68) du fût de la tige à rotule est la face antérieure, inclinée vers l'intérieur, d'une targette (64) insérée transversalement dans la douille, et la rampe ascendante (13) destinée à la surface d'ascension (40) du coulisseau (10) est un sabot à pan incliné, disposé sensiblement à l'opposé de la targette; et par le fait que le coulisseau (10), monté – de préférence centralement – dans le fût (7) de la tige à rotule, sort librement du fût (7) de la tige à rotule à l'extrémité de ce fût (7) de la tige à rotule, à sa face inférieure, par la surface d'ascension (40) prévue sur la tête (11) du coulisseau, est chargé par une force élastique (ressort 12) exerçant une pression en direction de l'extrémité du fût, et peut être verrouillé dans la position extrême.

5. Dispositif d'attelage selon la revendication 1 ou 4, caractérisé par le fait que les chevilles saillant latéralement du fût sont deux chevilles rondes disposées latéralement sur ce fût (7) de la tige à rotule, les chevilles rondes étant commodément des douilles (18) à excentriques qui sont installées à rotation sur des boulons (17) pouvant être vissés dans le fût (7) de la tige à rotule, et pénètrent dans ce fût (7) de la tige à rotule par un tronc de cône (19) pouvant être pourvu d'une cannelure.

6. Dispositif d'attelage selon la revendication 1 ou 4, caractérisé par le fait qu'aussi bien la partie extrême (42) de la surface d'ascension (40) en forme de rampe de la tête (11) du coulisseau, qu'une surface correspondante d'encrantage (43), dans la région extrême de la rampe ascendante (3), sont inclinées à l'opposé de l'inclinaison de la rampe.

7. Dispositif d'attelage selon la revendication 6, caractérisé par le fait que l'inclinaison de la partie extrême (42) et l'inclinaison correspondante de la surface d'encrantage (43) est comprise entre moins 030° et plus 010°, et avoisine de préférence 000° par rapport à un plan passant par l'axe (44) de la tige (7) à rotule.

8. Dispositif d'attelage selon la revendication 1 ou 4, caractérisé par le fait que l'inclinaison de la rampe ascendante et celle de la surface d'ascension (40) du coulisseau (10) se situent dans la zone d'autoblocage.

9. Dispositif d'attelage selon la revendication 8, caractérisé par le fait qu'un organe élastique (70, 71), inséré dans le coulisseau (10) sensiblement à l'opposé de la surface d'ascension (40) de ce coulisseau (10), ou bien dans le fût (7) de la tige à rotule, soulève élastiquement ledit coulisseau (10) de ce côté, à l'écart de sa position de contact à plat.

10. Dispositif d'attelage selon la revendication 1 ou 4, caractérisé par le fait que le coulisseau (10) peut coulisser par l'intermédiaire d'un levier de coulissement (22), traversant un évidement latéral (24) du fût (7) de la tige à rotule; par le fait qu'un boîtier (21) recouvrant l'évidement (24) est implanté latéralement sur le fût (7) de la tige à rotule, et un coulisseau éjecteur (33), s'étendant jusqu'à l'arrête antérieure (5) de la douille, est guidé dans la condition introduite de la tige à rotule (6); et par le fait que le levier de coulissement (22) est monté pivotant dans ce coulisseau éjecteur (33), et peut être consigné à demeure dans le boîtier (21) au moyen d'un cliquet de verrouillage (25) chargé élastiquement.

11. Dispositif d'attelage selon l'une ou plusieurs des revendications précédentes, caractérisé par le fait qu'un levier d'ouverture (45), monté du côté du fût (7) de la tige à rotule qui est tourné à l'opposé de la rotule d'accouplement (6), est relié au levier de coulissement (22), en tant que levier à un seul bras, et s'étend jusqu'au-dessous de la rotule d'accouplement (6), en ceinturant le fût (7) dans cette zone.

12. Dispositif d'attelage selon la revendication 11, caractérisé par le fait que l'évidement (24), ainsi que le levier de coulissement (22) qui traverse cet évidement (24) de part en part, sont ménagés sur le côté du fût (7) de la tige à rotule qui est tourné vers la rotule d'accouplement (6); et par le fait que le levier coudé de coulissement (22) s'étend éventuellement, en tant que levier d'ouverture, jusqu'au-dessous de la rotule d'accouplement.

13. Dispositif d'attelage selon la revendication 1 ou 4, caractérisé par le fait que tout le fût (7) de la tige à rotule, y compris la rotule d'accouplement (6), est percé d'un bout à l'autre dans le prolongement du perçage axial (15) recevant le coulisseau (10); et par le fait qu'un élément de pression /traction, introduit dans le perçage (56) du fût, est poussé sur la face extrême du coulisseau (10) par l'intermédiaire d'un goujon d'arrêt (52) chargé élastiquement et logé dans la rotule d'accouplement (6), avec faculté de coulissement longitudinal.

14. Dispositif d'attelage selon la revendication 13, caractérisé par le fait que le goujon d'arrêt (52) est pourvu de moyens (58) de venue en prise (fentes, filetage, etc.), en vue de la solidarisation avec un dispositif d'extraction.

15. Dispositif d'attelage selon la revendication 1 ou 4, caractérisé par le fait que la douille (1) est entourée par un tube carré (2).

Fig. 1

EP 0 223 996 B1

Fig. 2

7

11

10

44

42

12

3

40

7

**Fig. 3**

7

11

10

43

44

12

3

40

7

**Fig. 4**

7

11

10

44

42

12

43

3

40

7

**Fig. 5**

70

7

11

10

44

42

12

3

40

7

**Fig. 6**

71

7

11

10

44

42

12

3

40

7

**Fig. 7**

Fig. 8

Fig. 9

EP 0 223 996 B1

Fig. 10

EP 0 223 996 B1

Fig. 11

EP 0 223 996 B1